# EUROPÄISCHE PATENTSCHRIFT

(11) **EP 1 634 798 B1**
(45) Veröffentlichungstag und Bekanntmachung des Hinweises auf die Patenterteilung: **22.04.2009**
(21) Anmeldenummer: 05016469.8
(22) Anmeldetag: 29.07.2005
(51) Int. Cl.: B62D 21/12

(54) **Verbindungsverfahren und Adapter für Zugköpfe und Anbauchassis**
Joining method and adapter for attachable extension chassis for tractors
Procédé d'interconnection et adaptateur pour châssis reporté pour tête de traction d'un véhicle

(30) Priorität: 13.09.2004 DE 202004014342 U; 19.04.2005 DE 202005006305 U; 09.06.2005 DE 202005009101 U
(43) Veröffentlichungstag der Anmeldung: 15.03.2006
(73) Patentinhaber: AL-KO KOBER AG, D-89359 Kötz (DE)
(72) Erfinder: Dietrich, Gerhard, 89335 Ichenhausen (DE); Lehner, Helmut, 89359 Kötz (DE)
(74) Vertreter: Ernicke, Klaus Stefan

(56) Entgegenhaltungen:
- EP-A- 0 210 768
- EP-A- 0 308 574
- EP-A- 1 506 914
- DE-A1- 2 930 036
- DE-A1- 4 032 823
- DE-U1- 9 300 850
- DE-U1- 29 822 564
- GB-A- 2 137 938
- US-A- 2 327 585

## Beschreibung

Die Erfindung betrifft ein Verbindungsverfahren und einen Adapter für die Verbindung von motorisierten Zugköpfen mit einem Anbauchassis mit den Merkmalen im Oberbegriff des Hauptanspruchs.

Aus der Praxis ist es bekannt, bei Leichtlastwagen mit Frontmotor und Frontantrieb das Fahrgestell hinter der Kabine bzw. dem Führerhaus abzuschneiden und an dieser Stelle ein spezielles Anbauchassis anzuschweißen, welches eine andere Formgebung als das Original-Chassis aufweist. Ein solches Anbauchassis ist für Spezialaufbauten vorgesehen und ist z.B. tiefer gelegt und besitzt eine andere Achskonstruktion sowie ggf. andere Längen- und Breitenabmessungen. Die abgeschnittenen einachsigen Fahrzeugvorderteile werden als motorisierte Zugköpfe bezeichnet.

Aus der EP 0 308 574 sind motorisierte Zugköpfe bekannt, die von Fahrzeugherstellern mit einem verkürzten Fahrgestell geliefert werden und von vornherein zur Montage von Anbauchassis anderer Hersteller vorgesehen sind. Ein solcher Zugkopf hat ebenfalls einen Frontmotor und einen Frontantrieb. Ein Führerhaus kann wahlweise vorhanden sein. Das verkürzte Fahrgestell des Zugkopfes endet knapp hinter der Kabine oder den Sitzen. Wegen der Labilität der einachsigen Zugköpfe werden diese zu Transportzwecken mit den Rückseiten aneinander gestellt und die Fahrgestelle durch Zwischenflansche miteinander verbunden.

Aus der DE 298 22 564 U1 ist es bekannt, einen Zugkopf und ein Anbauchassis durch einen Chassisanschluss miteinander zu verbinden. Der Chassisanschluss besteht aus zwei Unterzügen, die nachträglich an der Unterseite des Zugkopfrahmens befestigt, z.B. angeschweißt werden. Die beiden Unterzüge verlaufen entlang der Längsträger des Zugkopfrahmens und besitzen an der Rückseite einen geraden Ansatz, an dem der zugehörige Längsträger des Anbauchassis über Napfverschraubungen befestigt wird. Über den Chassisanschluss wird auch ein Höhenversatz zwischen dem Zugkopfrahmen und dem in der Regel tiefergelegten Anbauchassis erzielt. Das nachträgliche Anschweißen der Unterzüge an den Längsträgern des Zugkopfrahmens kann zu Problemen mit Schweißverzug führen und verringert außerdem die Bodenfreiheit im Zugkopfbereich.

Aus der GB 2 276 128 A ist es bekannt, die verkürzten Längsträger eines motorisierten Zugkopfes mit stirnseitigen Flanschplatten zu versehen und hier das Anbauchassis mit entsprechenden Gegenplatten anzuschrauben. Diese Befestigungsart bringt Probleme mit der Biege- und Zugbelastung mit sich.

Die DE 93 00 850 U1 zeigt einen anderen Chassisanschluss für Zugköpfe und Anbauchassis. Bei einem fertigen Nutzfahrzeug werden die beiden Längsträger mit Abstand hinter der Kabinenrückwand abgeschnitten. Die beiden Längsträger bestehen aus zwei herstellerseitig beim Karosserierohbau miteinander verschweißten Hutprofilen, in die nach dem Abschneiden ein inneres Verstärkungsprofil mit einer doppelten U-Anordnung eingeschweißt wird. Zusätzlich wird in diesem verstärkten Längsträgerbereich außenseitig ein zweites U-förmiges Verstärkungsprofil angeschweißt, an dem dann die Längsträger des Anbauchassis angeschraubt werden.

Die DE 103 00 394 A1 und die DE 43 22 717 A1 befassen sich mit der Ausbildung von kompletten Serien-Fahrgestellen von schweren LKW's mit Heckantrieb.
Aus der DE 103 00 394 A1 ist hierbei ein modularer Aufbau des Rahmenvorderteils mit der Anpassungsmöglichkeit an unterschiedliche Fahrerhausbreiten und an unterschiedliche Einsatzzwecke des Nutzfahrzeugs für den Straßentransport oder den Baustellenbereich bekannt. Das Rahmenvorderteil wird mit den Längsträgern des Fahrzeugrahmens direkt oder über zwischengeschaltete Konsolen verbunden. Die Konsolen bestehen zumindest teilweise aus einem Gusswerkstoff und können zum Befestigung des Fahrerhauslagerung einschließlich eines zugehörigen Kippzylinders dienen und andererseits auch das Basisteil für eine Abschleppvorrichtung sein.

In der DE 43 22 717 A1 ist ein integraler Rahmen für Nutzfahrzeuge angesprochen, welcher mehrteilig ausgebildet ist und aus drei Teilrahmen besteht. Dies sind ein Vorderachsteilrahmen, ein Längsträgerteilrahmen und ein Hinterachsteilrahmen, die hintereinander angeordnet und untereinander direkt verbunden sind.

Die US-A-3,088,750 offenbart einen querwandverstärkten Ausgleichsrahmen für PKW's. Der Fahrzeugrahmen hat einen schmalen Vorder- und Rückteil und einen verbreiterten Mittelteil für den Fahrgastbereich. Die Längsträger dieser Rahmenteile sind untereinander durch querliegende Momenten-Rahmenboxen zu einer festen Einheit verbunden. Die verschiedenen Rahmenteile verlaufen hierbei in gleicher Höhe.

Die DE 40 32 823 A1 lehrt ein mittelschweres Verteilerfahrzeug in modularer Bauweise, welches auch eine Rahmenschnittstelle zum Anbau eines Aufbaufahrgestells aufweist. Diese Rahmenschnittstelle wird von einer Tragplatte gebildet, die mit dem zum Triebkopf gehörenden Rahmenlängsträger, an dessen rückwärtigen Ende verschweißt ist. Die Tragplatte dient als Stützstelle zur Befestigung des Aufbaufahrgestells mittels Schraubverbindungen.

Die nachveröffentlichte EP 1 506 914 A2 offenbart einen Adapter für einen nachträglichen Anbau an einem fertigen Zugkopf und für den Anschluss eines Anbauchassis. Der Zugkopf besitzt ein Fahrgestell mit zwei parallelen Längsträgern, die knapp hinter der Kabine abgeschnitten sind. An dieser Trennstelle wird nachträglich der Schraubadapter angebaut und in den abgeschnittenen Längsträger eingeführt.

Die DE 102 10 147 C1 befasst sich mit einer Tragstruktur eines Nutzfahrzeugs, die zur Variation und Anpassung des Fahrzeugs an unterschiedliche Einsatzzwecke modular ausgebildet ist. Die Tragstruktur umfasst im Frontbereich ein Achsträgerelement zur Lagerung einer Vorderachse, welches an der Vorderseite ein Frontelement zur Unterstützung des Fahrerhauses trägt. Das Achsträgerelement weist Achsträgerseitenteile auf, die über ein flaches Flanschteil mit Profillängsträgern des hinteren Fahrgestells verbunden werden können. Das Flanschteil ist am hinteren abgekanteten Anbauende des Achsträgerseitenteils stumpf gestossen und mittels einer Rasterung höhenverstellbar angeschraubt. Das Flanschteil und das Anbauende weisen hierfür eine Endkante und eine Anschlussleiste auf, die komplementär ausgebildet sind.

Es ist Aufgabe der vorliegenden Erfindung, eine bessere Möglichkeit zur Anbindung eines Anbauchassis an einen Zugkopf und ein entsprechendes Kraftfahrzeug aufzuzeigen.

Die Erfindung löst diese Aufgabe mit den Merkmalen im Hauptanspruch.
Sie geht von einem motorisierten und bevorzugt mit einem Frontantrieb versehenen Zugkopf aus, der bereits herstellerseitig ohne Chassis und Hinterachsanordnung bereit gestellt wird. Zur Verbindung dieses Zugkopfes mit einem in beliebiger Weise ausgebildeten Anbauchassis wird ein Adapter verwendet, der die bisherigen Anschlussprobleme beim Stand der Technik beseitigt. Der Adapter besitzt ein Rahmenanschlussteil zur Befestigung am Zugkopf und ein spezielles und angepasstes Chassisanschlussteil zur Verbindung mit dem Anbauchassis.

Der Adapter kann in das Fahrgestell des Zugkopfes integriert werden, was eine herstellerseitige Ausrüstung eines motorisierten Zugkopfes mit bereits angebauten Adaptern ermöglicht. Die Fahrgestellintegration sorgt für eine optimale Positionierung, Befestigung und Steifigkeit des Adapters. Außerdem wird Abfall vermieden. Ferner ist es vorteilhaft, wenn mehrere Adapter mit ein oder mehreren Quertraversen zu einer Adaptereinheit verbunden werden.
Dies verbessert und erleichtert die herstellerseitige Fahrgestellintegration. Der Adapter fügt sich außerdem besser in das vorhandene Fahrzeugkonzept ein und erlaubt eine optimierte Raum- und Konstruktionsausnutzung.

Hierbei ist es günstig, wenn das Rahmenanschlussteil des Adapters als Bestandteil eines Längsträgers des Fahrgestells ausgebildet ist. Der Adapter bzw. die Adaptereinheit können dadurch herstellerseitig im Austausch gegen ander Längsträgerteile angebaut und am Fahrgestell des Zugkopfes in bestmöglicher Weise befestigt werden. Durch diese Gestaltung ist für den Fahrzeughersteller ein Baukastensystem möglich, in dem die Fahrzeuge wahlweise mit normalen Fahrgestellen oder als motorisierte Zugköpfe mit angebauten Adaptern bzw. Adaptereinheit in der laufenden Produktion hergestellt und ausgeliefert werden können. Der Adapter bzw. die Adaptereinheit können dabei zusätzlich zu ihrer Adapterfunktion im Ersatz für andere Fahrgestellkomponenten tragende, formgebende und versteifende Funktionen für das Fahrgestell des motorisierten Zugkopfes und des gesamten Fahrzeuges mit Anbauchassis übernehmen.

Das Chassisanschlussteil ist an mindestens einer Seitenwand, vorzugsweise an beiden Seitenwänden, mit einem vorbereiteten Anschlussbereich für Längsträger des Anbauchassis ausgerüstet, die dadurch wahlweise an der Innen- oder Außenseite angebaut werden können. Die vorbereiteten Anschlussbereiche bieten außerdem die Möglichkeit zum Anbau eines Zwischenadapters, mit dem die Anbauhöhe des Anbauchassis und seiner Längsträger gegenüber dem Zugkopf bei Bedarf verändert werden kann. Der beanspruchte Adapter bietet dadurch vielfältige Anschlussmöglichkeiten für das Anbauchassis. Somit ergeben sich für den Chassishersteller große Freiheiten in der konstruktiven Gestaltung und der Auslegung des Anbauchassis. Mit einem Adapter bzw. einer Adaptereinheit können eine große Vielfalt von Ausführungsformen abgedeckt werden.

Ferner kann das Anbauchassis dank des wahlweisen Anbaus an der Innen- oder Außenseite des Adapters unterschiedliche Breiten haben. Die Längsträger können eine gerade oder auch eine gekröpfte Form haben. Ein gekröpftes Anbauchassis mit einer zur Hinterachse hin sich verbreiternden Form hat den Vorteil, dass an seinem schmaleren Vorderbereich seitlich neben den eingezogenen Längsträgern Stau- oder Freiräume für Unterbauten des Fahrzeugaufbaus geschaffen werden. Der ausgeweitete Hinterbereich kann eine breitere Achse zur Bildung eines Breitspurfahrwerks aufnehmen, welches das Fahrverhalten positiv beeinflusst und stabilisiert. Diese Ausgestaltung ist insbesondere für Wohnmobile günstig, lässt sich aber auch bei allen anderen Fahrzeug- und Aufbauformen mit Vorteil einsetzen.

Für die Verbindung des Adapters mit den Längsträgern des Anbauchassis ist eine zumindest bereichsweise formschlüssige Verbindung vorteilhaft. Diese kann in unterschiedlicher Weise ausgebildet sein. Im bevorzugten Ausführungsbeispiel sind mehrere Napfprägungen an Verbindungsstellen vorhanden, die zugleich mit einer dortigen Verschraubung zusammenwirken können. Dies bietet optimale Befestigungsmöglichkeiten in Verbindung mit einer leichten Montage und Demontage.

Das vorzugsweise kastenförmige Chassisanschlussteil mit seinen beidseitigen Anschlussbereichen bietet darüber hinaus eine bessere Abstützungsmöglichkeit für die Kräfteübertragung. Bei fluchtenden Verbindungsstellen kann das Verbindungsmittel, z.B. eine Dehnschraube, durch den Kasten hindurchgeführt werden und erhält dadurch eine größere Abstützbreite. Eingebaute Stützhülsen können hierbei die Spannkräfte aufnehmen und das kastenförmige Chassisanschlussteil versteifen. Die Formfestigkeit der Verbindung und der verbundenen Teile wird dadurch wesentlich verbessert. Insbesondere Torsions- und Biegekräfte werden weitestgehend verformungsfrei aufgenommen. Dies kommt der Gesamtsteifigkeit des Fahrzeugs und seines gesamten zusammengefügten Fahrgestells zu Gute.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 bis 4:: Verschiedene perspektivische Ansichten eines Zugkopfes mit Adaptern und Längsträgern eines Anbauchassis,
- Figur 5 und 6:: verschiedene perspektivische Ansichten des Adapters mit Fahrgestellteilen und Anbauchassis,
- Figur 7:: eine Seitenansicht des Adapters mit Anbauchassis,
- Figur 8:: eine geklappte Draufsicht auf die Anordnung von Figur 7,
- Figur 9:: eine perspektivische Ansicht einer Adaptereinheit mit zwei Adaptern und einer Quertraverse,
- Figur 10:: eine vergrößerte und abgebrochene perspektivische Darstellung eines Chassisanschlussteils von Figur 9,
- Figur 11 bis 13:: verschiedene Varianten der Adapterausbildung in Seitenansicht,
- Figur 14 bis 16:: verschiedene Varianten der Ausbildung des Chassisanschlussteils in Stirnansicht und
- Figur 17:: eine Variante eines gekröpften Anbauchassis in Draufsicht.

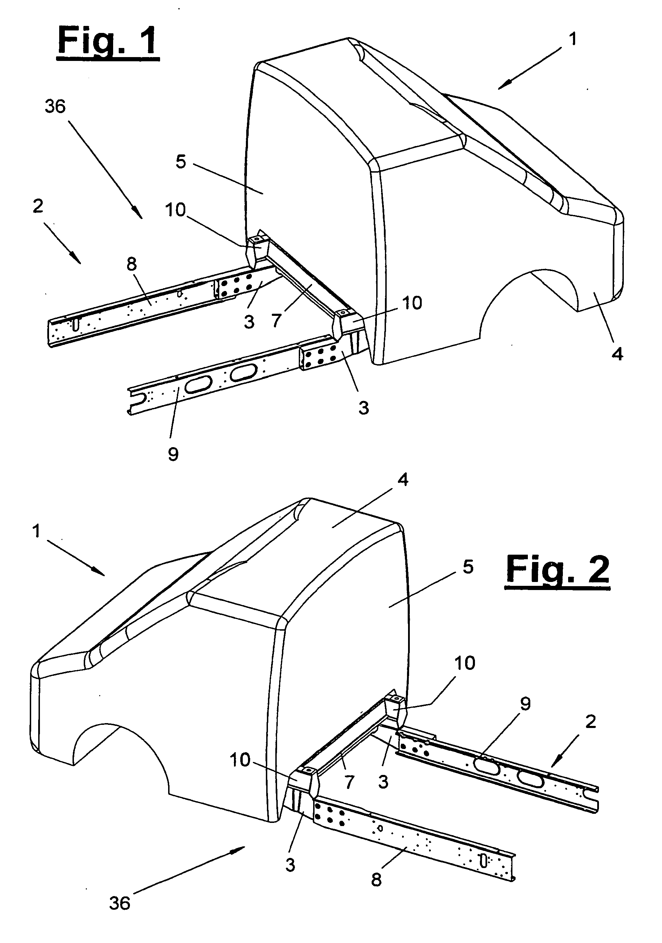

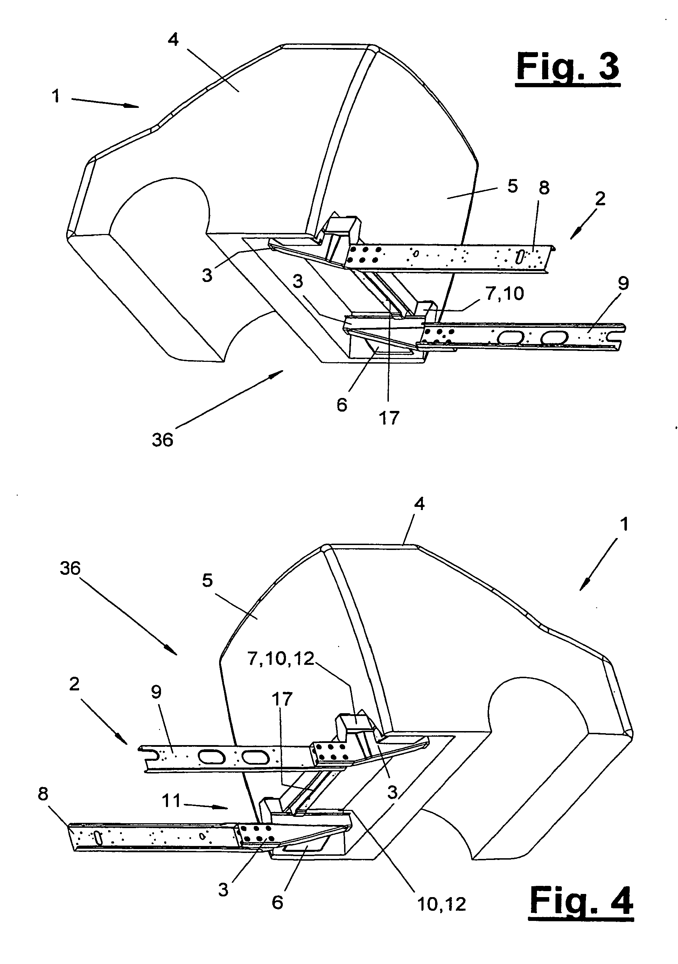

Figur 1 bis 4 zeigen ein Kraftfahrzeug (36), welches einen motorisierten einachsigen Zugkopf (1) und ein Anbauchassis (2) aufweist, die durch zwei Adapter (3) oder ggf. durch eine mit einer zusätzlichen Quertraverse (17) ausgerüsteten Adaptereinheit (11) miteinander verbunden sind. Auf das Anbauchassis (2) kann ein beliebiger Aufbau, z.B. ein Kasten- oder Pritschenaufbau (nicht dargestellt) gesetzt werden. Der Zugkopf (1) und das Anbauchassis (2) bilden mit dem Aufbau z.B. einen Leichtlastwagen, insbesondere ein Wohnmobil, ein Verkaufsfahrzeug oder dgl. Die Fahrzeugart ist beliebig wählbar. Die Erfindung betrifft den Adapter (3) und das damit ausgerüstete Kraftfahrzeug (36).

Der Zugkopf (1) besteht aus einer Kabine (4), die z.B. lediglich das Fahrerhaus mit ein oder zwei Sitzreihen bildet, wobei in den Zeichnungen von der Kabine (4) nur die Rohkarosse dargestellt ist. Der Zugkopf (1) hat ferner ein Fahrgestell (10), von dem ebenfalls nur Teile, nämlich zwei unterhalb der Kabinenrückwand (5) angeordnete und ggf. nach hinten vorragende Längsträger (10), ein Querträger sowie zwei seitliche Kabinenstützen (6) dargestellt sind. Der Zugkopf (1) umfasst ferner einen Antriebsmotor nebst Getriebe, Vorderachse und Rädern etc. Diese Antriebsteile, wie auch Sitze, Lenkrad, Pedallerie etc. sind der Übersicht halber nicht dargestellt. Der motorisierte Zugkopf (1) hat vorzugsweise einen Frontantrieb, wobei auf eine Kardanwelle oder eine andere Antriebsverbindung zur Hinterachse verzichtet werden kann. Alternativ lässt sich der Adapter (3) auch für heckgetriebene Fahrzeuge verwenden.

Vom Anbauchassis (2) sind der Übersicht halber nur zwei Längsträger (8,9) dargestellt, wobei in den Zeichnungen unterschiedliche Anbaumöglichkeiten für diese Längsträger (8,9) in den Figuren dargestellt sind. Die einen Längsträger (8) werden außenseitig an den Adaptern (3) angebaut, während für die anderen Längsträger (9) eine innenseitige Montage dargestellt ist. Das Anbauchassis (2) kann ferner eine Hinterachsanordnung mit ein oder mehreren Achsen, Rädern, Bremsen, Federung, Stabilisator und anderen Teilen umfassen. Für das Bremssystem ist eine Verbindung zum Zugkopf (1) vorgesehen. Am Anbauchassis (2) können weitere Komponenten, z.B. eine Ersatzradhalterung, ein Heckauszug, Hubstützen oder dergleichen angebaut sein. Der Kraftstofftank kann sich wahlweise am Anbauchassis (2) oder im Zugkopf (1) befinden. Das Anbauchassis (2) kann ansonsten in beliebig geeigneter Weise ausgebildet sein, z.B. entsprechend der DE 298 22 564 U1.

In einer nicht dargestellten Variante ist es ferner möglich, ähnlich wie in der EP 0 308 574 A1 zwei Zugköpfe (1) mit gegeneinander gestellten Rückwänden (5) über zwei an den beiden Adaptern (3) montierte Längsverbinder zu einer Transporteinheit zu koppeln und gegenseitig abzustützen. In dieser ggf. selbstfahrenden Transporteinheit können die Zugkopfpaare zum Chassishersteller befördert werden.

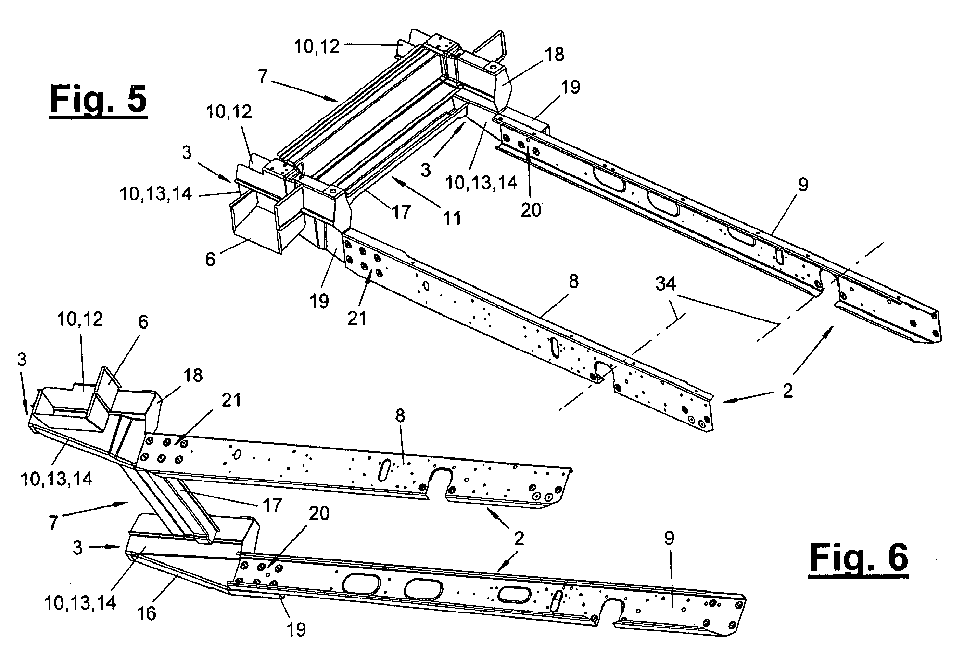

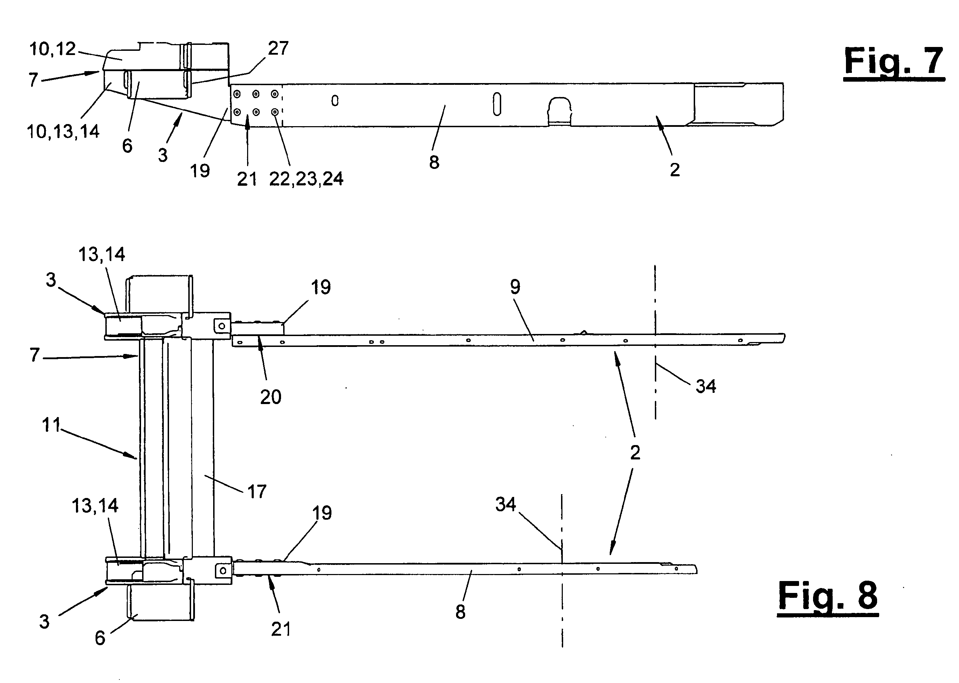

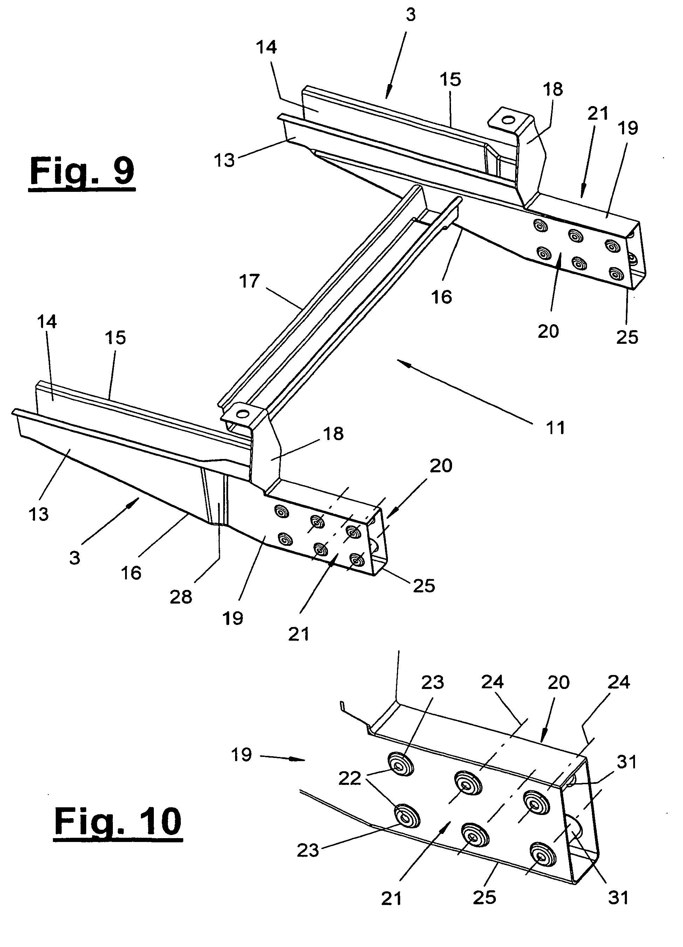

Der Adapter (3) ist in Figur 9 bis 16 in Varianten im einzelnen dargestellt. Figur 5 bis 8 und 17 zeigen die Einbausituation des Adapters (3) in verschiedenen Ansichten.

Der einzelne Adapter (3) besitzt ein Rahmenanschlussteil (13) zur Befestigung am Zugkopf (1) und ein Chassisanschlussteil (19) zur Verbindung mit dem Anbauchassis (2). Die Teile (13,19) sind vorzugsweise an unterschiedlichen Enden des Adapters (3) angeordnet und liegen in Längsrichtung hintereinander. Das Chassisanschlussteil (19) ragt rückseitig über die Kabinenrückwand (5) hinaus. Die Adapter (3) sind vorzugsweise im wesentlichen gleichartig bzw. spiegelsymmetrisch ausgebildet und haben die gleiche Länge. Ggf. kann die Länge differieren, falls z.B. auf lokale Einbauten, insbesondere einen Kraftstofftank oder dgl. Rücksicht zu nehmen ist. Etwaige Besonderheiten in der Formgebung von Karosserie bzw. Fahrgestell (7) des Zugkopfs (1) können ebenfalls zu Formabweichung zwischen linken und rechten Adaptern (3) führen.

Das Rahmenanschlussteil (13) kann in unterschiedlicher Weise ausgebildet sein. In den dargestellten Ausführungsbeispielen wird eine Konstruktion gezeigt, die eine Integration des Adapters (3) in das Fahrgestell (7) des Zugkopfes (1) ermöglicht. In der Zeichnung ist außerdem eine besondere Bauvariante dargestellt, in der zwei parallele Adapter (3) mit ein oder mehreren Quertraversen (17) zu jeweils einer H-förmigen Adaptereinheit (11) verbunden sind. Diese lässt sich besonders gut in das Fahrgestell (7) des Zugkopfes (1) integrieren und übernimmt anstelle anderer sonst vorhandener Fahrgestellkomponenten außer der Adapterfunktion auch normale Fahrgestellfunktionen. Alternativ kann die Quertraverse (17) weggelassen werden.

In der gezeigten Ausführungsform ist das Rahmenanschlussteil (13) als Bestandteil eines Längsträgers (10) des Fahrgestells (7) ausgebildet. Hierbei ersetzt es vorzugsweise ein anderes Fahrgestellteil. Hierdurch kann der Adapter (3) bereits herstellerseitig in der laufenden Fahrzeugproduktion und bereits im Karosserierohbau eingebaut und in den Zugkopf (1) und dessen Fahrgestell (7) integriert werden. Dies ist besonders hinsichtlich der Verbindungstechnik von Vorteil. Das Rahmenanschlussteil (13) besitzt hierfür z.B. mindestens einen längslaufenden und seitlich nach außen abgekanteten Flansch (15) zur Verbindung mit dem Fahrgestell (7). Dies kann vorzugsweise eine Schweißverbindung sein, die eine besonders hohe Festigkeit bietet. Durch die Fahrgestellintegration kann die Schweißverbindung in unkritischer Weise bereits im Karosserierohbau eingebracht werden. Hierbei ist die Zugänglichkeit der Verbindungsstellen uneingeschränkt gegeben. Bei einer nachträglichen Montage an einem bereits fertigen Fahrgestell ist dies nicht ohne weiteres möglich. Außerdem könnten sich bei einer nachträglichen Montage Probleme mit einem bereits vorhandenen Kraftstofftank und dessen etwaige Beschädigung ergeben. Diese Probleme lassen sich zwar ebenfalls lösen, wobei die gezeigte Ausführungsform aber Vorteile hat.

Das gezeigte Rahmenanschlussteil (13) ist als komplementäres Trägergegenprofil (14) zu einem Trägerprofil (12) am Fahrgestell (7) ausgebildet. Der Längsträger (10) setzt sich nach der Verbindung aus dem zugkopfseitigen Trägerprofil (12) und dem adapterseitigen Trägergegenprofil (14) zusammen. Das komplementäre Trägergegenprofil (14) wird dabei im Austausch gegen ein anderes für normale Fahrgestelle verwendetes Trägerprofil eingebaut.

Die Trägerprofile (12,14) können in beliebig geeigneter Weise ausgebildet sein. In der gezeigten Ausführungsform sind sie als schalenförmige Blechprofile, vorzugsweise als gegeneinander gestellte, im wesentlichen U-förmige Hutprofile, ausgebildet. Innenseitig können die Trägerprofile (12,14) mit Versteifungen, z.B. Querrippen oder dgl. versehen sein. An der Verbindungsstelle sind die beiden Hutprofile offen und werden nur an ihren längslaufenden Flanschen (15) miteinander verbunden, was vorzugsweise durch Schweißen, insbesondere durch Flansch-Laserschweißen, geschieht. Alternativ kann das Trägergegenprofil (14) an der Oberseite eine Querwand und somit einen geschlossenen Querschnitt aufweisen.

Das Trägergegenprofil (14) besitzt vorzugsweise eine biegegünstige keilförmige Gestalt, wobei sich die Profilhöhe nach hinten zum rückwärtigen Chassisanschlussteil (19) vergrößert. Hierdurch kann eine Art Unterzug (16) gebildet werden. Das Trägergegenprofil (14) kann in dieser Gestaltung einteilig ausgeformt sein. Es kann alternativ mehrteilig sein und aus mehreren Profilteilen oder Profilabschnitten und ggf. auch Rohrteilen bestehen. In diesem Fall kann der schalen- oder wannenförmige Abschnitt des Trägergegenprofils (14) nur an der Oberseite vorhanden sein und dort in der vorbeschriebenen Weise das Unterteil des Längsträgers (10) des Fahrgestells (7) bilden.

Das Rahmenanschlussteil (13) kann ferner eine angeformte, hochstehende, plattenförmige Trägerabdeckung (18) aufweisen, die ggf. am oberen freien Ende einen abgewinkelten Flansch trägt. Die Trägerabdeckung (18) verschließt den von den beiden Trägerprofilen (12,14) gebildeten hohlen Längsträger (10) am rückwärtigen Ende und ist an den Querschnitt des zugkopfseitigen Trägerprofiles (12) und ggf. den oberen Bereich des adapterseitigen Trägergegenprofils (14) angepasst. Über den abgekanteten Flansch kann eine Verbindung, z.B. eine Schraub- oder Schweißverbindung mit dem fahrzeugseitigen Trägerprofil (12) erfolgen. Ggf. kann auch randseitig die Trägerabdeckung (18) mit dem fahrzeugseitigen Trägerprofil (12) verschweißt werden. Eine solche Verbindung verbessert auch die Steifigkeit des Längsträgers (10).

Das Rahmenanschlussteil (13) kann ferner einen Anbindungsbereich (27) für eine seitliche Kabinenstütze (6) aufweisen. Hierfür können an der äußeren Seitenwand des Trägergegenprofils (14) geeignete Anschlussflächen zur Anlage und Führung ausgeformt sein. Die Verbindung mit der Kabinenstütze (6) kann in beliebig geeigneter Weise, z.B. durch eine Schweißnaht, geschaffen werden. Die Anordnung verbessert ebenfalls die Integration des Adapters (3) bzw. der Adaptereinheit in das Fahrgestell (7) bzw. die Karosserie des Zugkopfes (1).

Das Rahmenanschlussteil (13) kann ferner im rückwärtigen Bereich und insbesondere am Übergang zum Chassisanschlussteil (19) an der Außenseite eine Abkantung (28) oder einen Rücksprung aufweisen. Die Abkantung (28) kann in der Tiefe auf die Stegwandstärke der Längsträger (8,9) des Anbauchassis (2) abgestimmt werden, so dass die Außenwände der Längsträger (8,9) und des Rahmenanschlussteils (13) im verbreiterten Bereich miteinander fluchten können.

Das Chassisanschlussteil (19) kann gegenüber dem Rahmenanschlussteil (13) in der Höhe versetzt sein. Figur 5 bis 11 zeigen diese Anordnung, in der das Chassisanschlussteil (19) eine Absenkung (29) oder eine Stufe aufweist. Durch diese Gestaltung wird das Anbauchassis (2) gegenüber dem Fahrgestell (7) des Zugkopfes (1) tiefer gelegt.

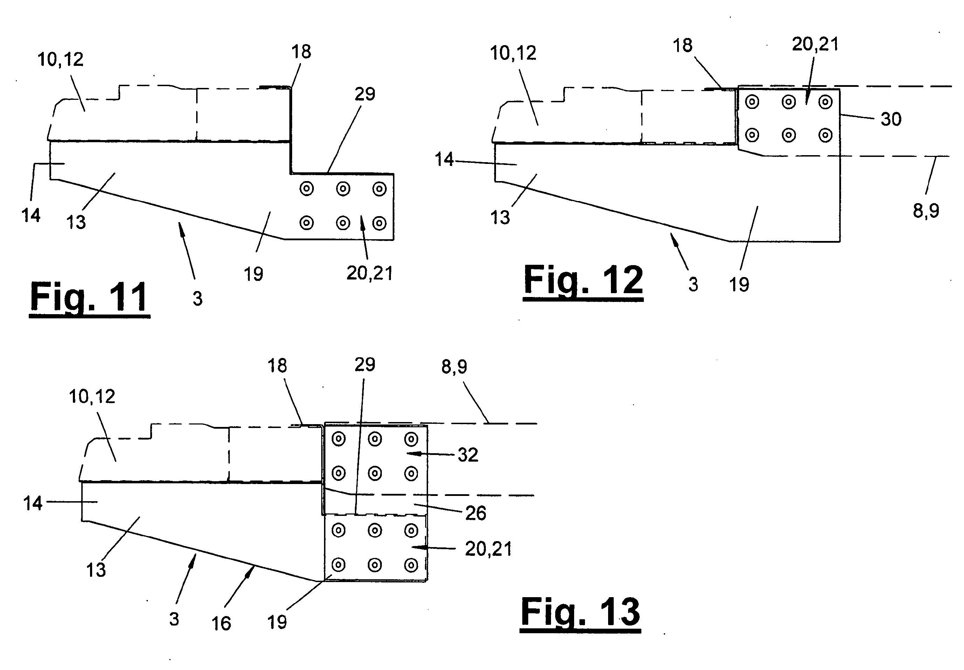

Figur 12 zeigt hierzu eine Variante, in der das Chassisanschlussteil (19) einen Aufsatz (30) aufweist und sich nach oben bis auf Anschlusshöhe zum fahrzeugseitigen Trägerprofil (12) erstreckt. Die Längsträger (8,9) können dadurch in ähnlicher oder gleicher Höhe wie das Original-Fahrgestell bzw. Original-Chassis angeschlossen werden.

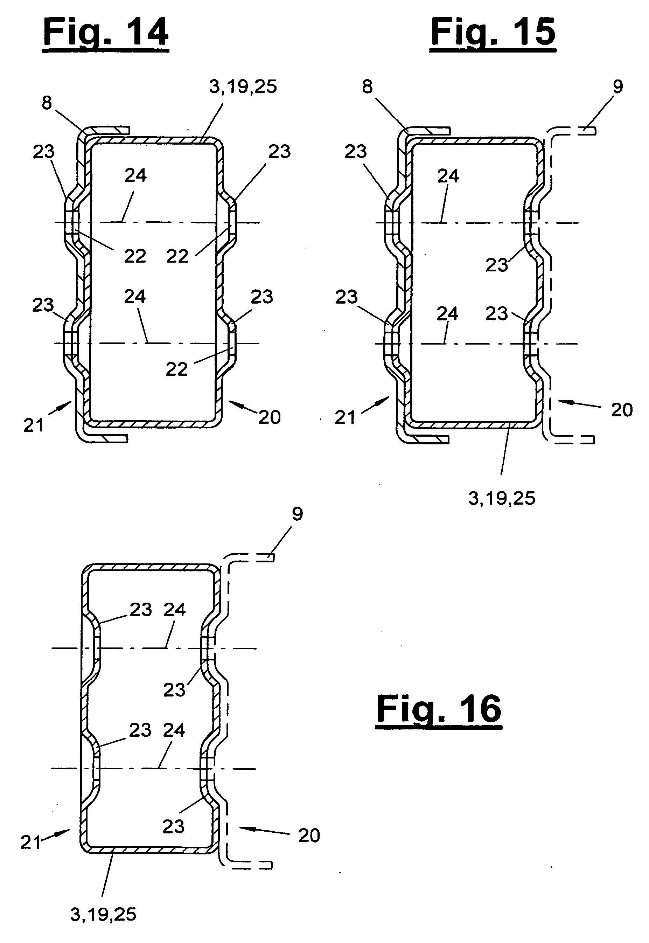

Das Chassisunterteil (19) hat eine im wesentlichen quaderförmige Kasten- oder Rohrform (25) und ist innenseitig vorzugsweise hohl. Figur 14 bis 16 zeigen hierzu die rückwärtigen Stirnansichten. Der ganze Adapter (3) kann als Blechbauteil ausgebildet sein und aus einem beliebig geeigneten metallischen Material bestehen. Der Adapter (3) kann hierbei eine Biege- und Stanzkonstruktion oder alternativ eine Schweißkonstruktion aus verschiedenen Blechteilen sein. Vorzugsweise ist der Adapter (3) in der Materialwahl an den Werkstoff des Fahrgestells (7) bzw. dessen Trägerprofil (12) in geeigneter Weise angepasst. Hierdurch kann eine verformungs- und schweißgünstige Werkstoffpaarung erzielt werden.

Das Chassisanschlussteil (19) hat an mindestens einer Seitenwand, vorzugsweise an beiden Seitenwänden, einen vorbereiteten Anschlussbereich (20,21). Hier können einerseits die Längsträger (8,9) des Anbauchassis (2) befestigt werden, wobei durch die beidseitige Anordnung wahlweise eine innenseitige oder außenseitige Befestigung möglich ist, wodurch sich unterschiedliche Chassisbreiten ergeben. An den Anschlussbereichen (20,21) kann außerdem ein nachfolgend noch im einzelnen beschriebener Zwischenadapter (26) bei Bedarf angebaut werden.

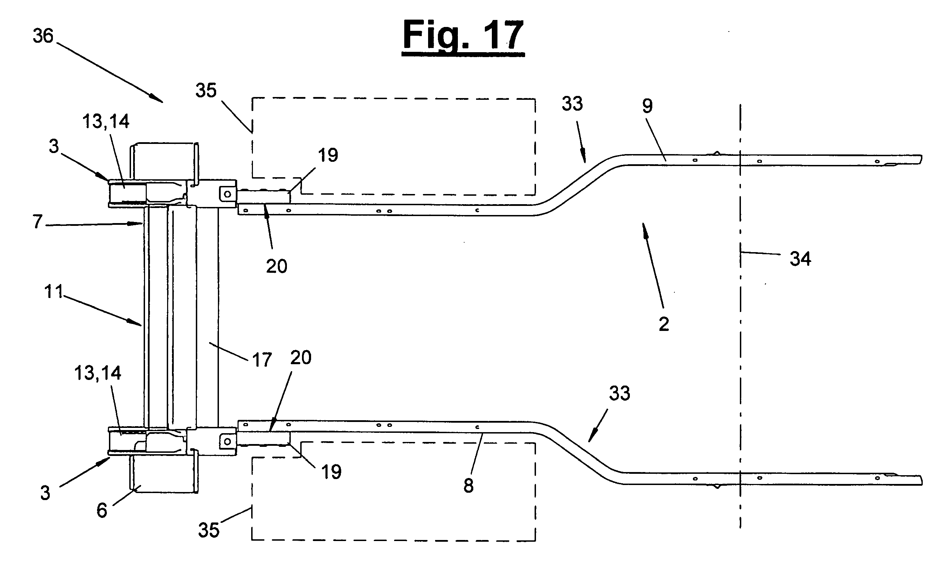

Die Längsträger (8,9) des Anbauchassis (2) können eine unterschiedliche Formgebung haben. Im Ausführungsbeispiel von Figur 5 bis 8 sind sie z.B. als gerade Trägerprofile ausgestaltet, wodurch sich eine einheitliche Breite des Anbauchassis (2) ergibt. In der Variante von Figur 17 haben die Längsträger (8,9) eine gekröpfte und im rückwärtigen Bereich seitlich ausgestellte Form. Die Längsträger (8,9) sind hierbei mit ihren eingezogenen Vorderenden z.B. an den inneren Anschlussbereichen (20) befestigt, wodurch das Anbauchassis (2) in vorderen Bereich schmal baut. In diesem vorderen Bereich bis zur ausgestellten Kröpfung (33) ergibt sich dadurch außenseitig neben den eingezogenen Längsträgern (8,9) ein Freiraum oder Stauraum (35), in den Teile des Fahrzeugaufbaus ragen können. Dies können z.B. Unterbauten, wie Staukisten etc. sein. Der hintere verbreiterte Chassisbereich bietet die Möglichkeit zur Aufnahme einer breiteren Achse (34), mit der ein Breitspurfahrwerk gebildet werden kann, welches bessere und stabilere Fahreigenschaften bietet. Die Achse (34) ist in den verschiedenen Ausführungsformen der Übersicht halber durch eine strichpunktierte Linie angedeutet. Es kann sich hierbei um eine beliebige Achsanordnung als Einzelachse, Tandemachse oder dergl. handeln. Auch die technische Ausgestaltung und die Achsgeometrie sind beliebig wählbar, z.B. als Schräglenker- oder Längslenkerachse.

Die inneren und äußeren Anschlussbereiche (20,21) sind vorzugsweise gleichartig ausgebildet. Alternativ ist auch eine unterschiedliche Gestaltung, z.B. zur Anpassung an unterschiedliche Chassiserfordernisse, möglich. Die Anschlussbereiche (20,21) besitzen jeweils ein oder mehrere formschlüssige Stützelemente (23), die von der Kastenwand vorstehen oder zurückspringen. Sie ermöglichen eine formschlüssige Verbindung mit den entsprechend komplementär mit Gegenstützelementen ausgerüsteten Längsträgern (8,9), dem Zwischenadapter (26) oder anderen Teilen. Die formschlüssigen Stützelemente (23) können in unterschiedlicher Weise und beliebig wählbar ausgebildet sein.

In der gezeigten Ausführungsform sind die formschlüssigen Stützelemente (23) als Napfprägungen gestaltet. Die Anschlussbereiche (20,21) besitzen mehrere, z.B. sechs, gleichmäßig verteilte Verbindungsstellen (22), die jeweils eine Napfprägung (23) für eine formschlüssig abgestützte Schraubverbindung (24) aufweisen. In den Napfprägungen (23) sind hierfür geeignete Durchgangsbohrungen für die Verschraubung (24) vorhanden. Die Verschraubung (24) ist in Figur 9 und 10 sowie Figur 14 bis 16 durch die Schraubenlängsachsen schematisch angedeutet.

Für die Ausrichtung der Napfprägungen (23) gibt es verschiedene, in Figur 14 bis 16 dargestellte Möglichkeiten.

In der Variante von Figur 14 sind die Napfprägungen (23) an beiden Anschlussbereichen (20,21) nach außen gewölbt. Alternativ ist gemäß Figur 16 eine Innenwölbung möglich. Im Unterschied zu diesen beiden Variationen mit entgegen gesetzt gerichteten Napfprägungen (23) zeigt Figur 15 die dritte Variante mit gleich gerichteten Napfprägungen (23), die hier z.B. zur Chassisaußenseite gerichtet sind, alternativ aber auch zur Chassisinnenseite weisen können.

Die Längsträger (8,9) weisen entsprechende komplementäre Napfprägungen auf, so dass bei der Montage die vorzugsweise konischen bzw. im Querschnitt ringförmigen Napfprägungen zentrisch ineinander greifen und die gewünschte formschlüssige Abstützung bieten.

Alternativ können statt der einzelnen und mit jeweils einer Durchgangsbohrung versehenen Napfprägung (23) sickenförmigen Prägungen mit mehreren Durchgangsbohrungen vorhanden sein, wobei die Sickenlängsachse sich vorzugsweise quer zur Chassislängsachse erstreckt. Die Längsträger (8,9) haben z.B. einen C-förmigen Querschnitt und können in Montagestellung das Chassisanschlussteil (19) umgreifen.

Vorzugsweise fluchten die Verbindungsstellen (22) der gegenüber liegenden Anschlussbereiche (20,21). Dies ermöglicht ein Durchstecken geeigneter Verbindungselemente, z.B. Schrauben, durch den Kasten (25). Dies ergibt außenseitige Befestigungsstellen an den Längsträgern (8,9) und dem Chassisanschlussteil (19). Die Schrauben (24) können z.B. als Dehnschrauben ausgebildet sein, was Vorteile mit der Aufrechterhaltung der Spannkraft mit sich bringt und insbesondere im Zusammenwirken mit den beidseits nach außen gewölbten Napfprägungen (23) günstig ist. Die Schraubenköpfe und die Muttern können direkt an den Napfprägungen (23) anliegen. Alternativ sind flache Beilagscheiben oder gewölbte Hutscheiben möglich, die ebenfalls eine der Napfprägung (23) angepasste Form haben und über letztere gestülpt werden. Über diese gewölbten Hutscheiben können die Spannkräfte gleichmäßig verteilt werden.

Bei durchgesteckten Verbindungselementen können im Kasten (25) lose oder fest angebrachte Stützhülsen (31) an den Verbindungsstellen (22) vorhanden sein. Sie stützen zusätzlich die Spannkräfte der Verbindungselemente ab und stabilisieren den Kasten (25) bzw. das hohle Chassisanschlussteil (19).

In weiterer Variante können an den Verbindungsstellen (22) an der Kasteninnenseite jeweils Schweißmuttern zur Aufnahme kurzer Befestigungsschrauben angebracht sein. Alternativ sind die Schraubverbindungen mit losen Schrauben und Muttern möglich. In weiterer Abwandlung können Niete oder andere Verbindungselemente verwendet werden. Grundsätzlich sind beliebige Verbindungstechniken, darunter Kleben, Schweißen oder dergleichen, möglich, wobei die formschlüssigen Stützelemente (23) in Form der Napfprägungen oder in anderer Ausgestaltung für die Positionierung und seitliche Abstützung sorgen.

Wenn bei einem Adapter (3) oder einer Adaptereinheit (11) mit der in den Zeichnungen dargestellten Absenkung (29) des Chassisanschlussteils (19) eine Höherlegung des Anbauchassis (2) und seiner Längsträger (8,9) gewünscht wird, kann der vorerwähnte Zwischenadapter (26) zum Einsatz kommen. Er ist in Figur 13 schematisch dargestellt und besteht aus einem U- oder kastenförmigen Blechprofil, welches im unteren Bereich an ein oder beiden Anschlussbereichen (20,21) des Chassisanschlussteils (19) befestigt wird. Der Zwischenadapter (26) hat einen oberen Bereich von beliebiger Höhe, der z.B. bis ca. die Oberkante des zugkopfseitigen Trägerprofils (12) reicht. In diesem oberen Bereich ist an ein oder beiden Seitenwänden des Zwischenadapters (26) ein Anschlussbereich (32) angeordnet, der in der Ausgestaltung dem jeweils zugehörigen Anschlussbereich (20,21) des Chassisanschlussteils (19) entspricht. Der Zwischenadapter (26) kann eine ähnliche Kasten- oder Rohrform wie das Chassisanschlussteil (19) mit nach unten abstehenden Befestigungsflanschen haben. Die Bauhöhe des oberen Bereichs ist variabel und richtet sich nach der gewünschten Anbauhöhe der Längsträger (8,9). In Figur 13 sind die Längsträger (8,9) z.B. fluchtend mit dem fahrzeugseitigen Längsträger (10) angebaut.

Varianten der beschriebenen Ausführungsformen sind in verschiedener Weise möglich. Insbesondere können die gezeigten Gestaltungsmerkmale beliebig untereinander vertauscht werden. Die gezeigte Ausgestaltung des Chassisanschlussteils (19) kann in Verbindung mit anderen Arten und Ausführungsformen von Rahmenanschlussteilen (13) kombiniert werden. Alternativ können die gezeigten Ausführungsformen des Rahmenanschlussteils (13) mit anderen Gestaltungen des Chassisanschlussteils (19) kombiniert werden, bei denen z.B. nur eine einseitige Anbindung oder auch glatte Seitenwände ohne formschlüssige Stützelemente (23) oder beliebige andere Gestaltungen vorgesehen sind.

### BEZUGSZEICHENLISTE

- 1: Zugkopf
- 2: Anbauchassis
- 3: Adapter
- 4: Kabine
- 5: Rückwand
- 6: Kabinenstütze
- 7: Fahrgestell
- 8: Längsträger von Anbauchassis
- 9: Längsträger von Anbauchassis
- 10: Längsträger von Fahrgestell
- 11: Adaptereinheit
- 12: Trägerprofil, Hutprofil oben
- 13: Rahmenanschlussteil
- 14: Trägergegenprofil, Hutprofil unten
- 15: Flansch
- 16: Unterzug
- 17: Quertraverse an Adapter
- 18: Trägerabdeckung, Stirndeckel
- 19: Chassisanschlussteil
- 20: Anschlussbereich innen
- 21: Anschlussbereich außen
- 22: Verbindungsstelle, Schraubstelle
- 23: formschlüssiges Stützelement, Napfprägung
- 24: Verschraubung, Schraubverbindungen
- 25: Kasten
- 26: Zwischenadapter
- 27: Anbindungsbereich für Kabinenstütze
- 28: Abkantung, Rücksprung
- 29: Absenkung
- 30: Aufsatz
- 31: Stützhülse
- 32: Anschlussbereich am Zwischenadapter
- 33: Kröpfung
- 34: Achse, Hinterachse
- 35: Freiraum, Stauraum
- 36: Kraftfahrzeug

## Patentansprüche

1. Verfahren zum Verbinden von motorisierten Zugköpfen (1) und Anbauchassis (2) mittels eines Adapters (3), der mittels eines Rahmenanschlussteils (13) mit dem Zugkopf (1) und mittels eines Chassisanschlussteils (19) mit dem Anbauchassis (2) verbunden wird, **dadurch gekennzeichnet, dass** der Adapter (3) bei der Herstellung des Zugkopfs (1) im Karosserierohbau in dessen Fahrgestell (7) integriert wird, wobei das Rahmenanschlussteil (13) den Bestandteil eines hohlen Längsträgers (10) des Fahrgestell (7) bildet.

2. Verfahren nach Anspruch 1, **dadurch gekennzeichnet, dass** das Anbauchassis (2) mit Höhenversatz zum Zugkopf (1) angebaut wird.

3. Verfahren nach Anspruch 1 oder 2, **dadurch gekennzeichnet, dass** das Anbauchassis (2) wahlweise an der Innenseite oder der Außenseite des Adapters (3) befestigt wird.

4. Verfahren nach Anspruch 1, 2 oder 3, **dadurch gekennzeichnet, dass** zur Bildung einer selbstfahrenden Transporteinheit zwei Zugköpfe (1) rückseitig gegeneinander gestellt werden, wobei am Adapter (3) Längsverbinder zur Verbindung der Zugköpfe (1) befestigt werden.

5. Adapter zur Verbindung von motorisierten Zugköpfen (1) und Anbauchassis (2), wobei der Adapter (3) ein Rahmenanschlussteil (13) zur Befestigung am Zugkopf (1) und ein Chassisanschlussteil (19) zur Verbindung mit dem Anbauchassis (2) aufweist, **dadurch gekennzeichnet, dass** der Adapter (3) in das Fahrgestell (7) des Zugkopfs (1) bei dessen Karosserierohbau integrierbar ist, wobei das Rahmenanschlussteil (13) als Bestandteil eines hohlen Längsträgers (10) des Fahrgestell (7) ausgebildet ist.

6. Adapter nach Anspruch 5, **dadurch gekennzeichnet, dass** der Adapter (3) ein komplementäres Trägergegenprofil (14) zu einem Trägerprofil (12) des Längsträgers (10) aufweist.

7. Adapter nach Anspruch 5 oder 6, **dadurch gekennzeichnet, dass** mehrere Adapter (3) mit ein oder mehreren Quertraversen (17) zu einer Adaptereinheit (11) verbunden sind.

8. Adapter nach Anspruch 5, 6 oder 7, **dadurch gekennzeichnet, dass** das Trägergegenprofil (14) mindestens einen Flansch (15) zur Verbindung, vorzugsweise Schweißverbindung, mit dem Trägerprofil (12) des Längsträgers (10) aufweist, wobei die Trägerprofile (12,14) als schalenförmige Blechprofile, vorzugsweise als Hutprofile, ausgebildet sind.

9. Adapter nach einem der vorhergehenden Ansprüche, **dadurch gekennzeichnet, dass** das Trägergegenprofil (14) eine keilförmige Gestalt zur Bildung eines Unterzugs (16) aufweist und das Unterteil des Längsträgers (10) des Fahrgestells (7) bildet, wobei das Rahmenanschlussteil (13) eine Trägerabdeckung (18) aufweist.

10. Adapter nach einem der vorhergehenden Ansprüche, **dadurch gekennzeichnet, dass** das Rahmenanschlussteil (13) einen Anbindungsbereich (27) für eine Kabinenstütze (6) aufweist.

11. Adapter nach einem der vorhergehenden Ansprüche, **dadurch gekennzeichnet, dass** das Chassisanschlussteil (19) gegenüber dem Rahmenanschlussteil (13) in der Höhe versetzt ist und eine Absenkung (29) oder einen Aufsatz (30) aufweist.

12. Adapter nach einem der vorhergehenden Ansprüche, **dadurch gekennzeichnet, dass** das Chassisanschlussteil (19) an mindestens einer seiner Seitenwände, vorzugsweise an beiden Seitenwänden einen vorbereiteten Anschlussbereich (20,21), insbesondere für Längsträger (8,9) des Anbauchassis (2), aufweist.

13. Adapter nach einem der vorhergehenden Ansprüche, **dadurch gekennzeichnet, dass** das Chassisanschlussteil (19) eine im wesentlichen quaderförmige Kasten- oder Rohrform (25) aufweist.

14. Adapter nach einem der vorhergehenden Ansprüche, **dadurch gekennzeichnet, dass** der Anschlussbereich (20,21) jeweils ein oder mehrere formschlüssige Stützelemente (23) für eine formschlüssige Verbindung aufweist.

15. Adapter nach einem der vorhergehenden Ansprüche, **dadurch gekennzeichnet, dass** der Anschlussbereich (20,21) mehrere Verbindungsstellen (22) mit Napfprägungen für formschlüssig abgestützte Schraubverbindungen (24) aufweist, wobei die Napfprägungen am Anschlussbereich (20,21) vorzugsweise nach außen gewölbt sind.

16. Adapter nach einem der vorhergehenden Ansprüche, **dadurch gekennzeinhnet, dass** im hohlen Chassisanschlussteil (19) an ein oder mehreren Verbindungsstellen (22) eine Stützhülse (31) angeordnet ist.

17. Adapter nach einem der vorhergehenden Ansprüche, **dadurch gekennzeichnet, dass** am Chassisanschlussteil (19) ein Zwischenadapter (26) mit ein oder mehreren höhenversetzten Anschlussbereichen (32) angeordnet ist.

18. Kraftfahrzeug bestehend aus einem motorisierten Zugkopf (1) und einem Anbauchassis (2), die durch mindestens einen Adapter (3) mit einem Rahmenanschlussteil (13) zur Befestigung am Zugkopf (1) und einem Chassisanschlussteil (19) zur Befestigung am Anbauchassis (2) verbunden sind, **dadurch gekennzeichnet, dass** der Adapter (3) im Karosserierohbau in das Fahrgestell (7) des Zugkopfs (1) integriert ist, wobei das Rahmenanschlussteil (13) als Bestandteil eines hohlen Längsträgers (10) des Fahrgestells (7) am Fahrgestell (7) ausgebildet ist und ein komplementäres Trägergegenprofil (14) zu einem Trägerprofil (12) des Längsträgers (10) aufweist und die beiden Trägerprofile (12,14) miteinander verbunden sind.

19. Kraftfahrzeug nach Anspruch 18, **dadurch gekennzeichnet, dass** der Adapter (3) nach einem der Ansprüche 5 bis 17 ausgebildet ist.

20. Kraftfahrzeug nach Anspruch 18 oder 19, **dadurch gekennzeichnet, dass** das Anbauchassis (2) gerade oder gekröpfte (33) Längsträger (8,9) aufweist.

21. Kraftfahrzeug nach Anspruch 18, 19 oder 20, **dadurch gekennzeichnet, dass** die nach außen gekröpften (33) Längsträger (8,9) mit ihren eingezogenen Vorderenden am inneren Anschlussbereich (20) des Chassisanschlussteils (19) montiert sind.

## Claims

1. Method for connecting motorized tractor heads (1) and attachable chassis (2) by means of an adaptor (3) which is connected to the tractor head (1) by means of a frame-joining part (13) and to the attachable chassis (2) by means of a chassis-joining part (19), **characterized in that,** during the production of the body shell of the tractor head (1), the adaptor (3) is integrated into the base frame (7) of said tractor head, with the frame-joining part (13) forming the part of a hollow longitudinal member (10) of the base frame (7).

2. Method according to Claim 1, **characterized in that** the attachable chassis (2) is attached to the tractor head (1) with a height offset.

3. Method according to Claim 1 or 2, **characterized in that** the attachable chassis (2) is fastened either to the inner side or the outer side of the adaptor (3).

4. Method according to Claim 1, 2 or 3, **characterized in that,** in order to form a self-propelling transportation unit, two tractor heads (1) are positioned with their rear sides against each other, with longitudinal connectors for connecting the tractor heads (1) being fastened to the adaptor (3).

5. Adaptor for the connection of motorized tractor heads (1) and attachable chassis (2), wherein the adaptor (3) has a frame-joining part (13) for the fastening to the tractor head (1) and a chassis-joining part (19) for the connection to the attachable chassis (2), **characterized in that** the adaptor (3) can be integrated into the base frame (7) of the body shell of the tractor head (1), with the frame-joining part (13) being designed as part of a hollow longitudinal member (10) of the base frame (7).

6. Adaptor according to Claim 5, **characterized in that** the adaptor (3) has a support counter profile (14) which is complementary to a support profile (12) of the longitudinal member (10).

7. Adaptor according to Claim 5 or 6, **characterized in that** a plurality of adaptors (3) are connected to one or more crosspieces (17) to form an adaptor unit (11).

8. Adaptor according to Claim 5, 6 or 7, **characterized in that** the support counter profile (14) has at least one flange (15) for the connection, preferably welded connection, to the support profile (12) of the longitudinal member (10), with the support profiles (12, 14) being designed as shell-shaped sheet-metal profiles, preferably as hut profiles.

9. Adaptor according to one of the preceding claims, **characterized in that** the support counter profile (14) has a wedge-shaped design in order to form a truss (16) and forms the lower part of the longitudinal member (10) of the base frame (7), with the frame-joining part (13) having a support covering (18).

10. Adaptor according to one of the preceding claims, **characterized in that** the frame-joining part (13) has a joining area (27) for a cab support (6).

11. Adaptor according to one of the preceding claims, **characterized in that** the chassis-joining part (19) is offset in height in relation to the frame-joining part (13) and has a lowered portion (29) or an attachment (30).

12. Adaptor according to one of the preceding claims, **characterized in that** the chassis-joining part (19) has a provided joining region (20, 21) on at least one of its side walls, preferably on both side walls, in particular for longitudinal members (8, 9) of the attachable chassis (2).

13. Adaptor according to one of the preceding claims, **characterized in that** the chassis-joining part (19) has a substantially cuboidal box shape or tubular shape (25).

14. Adaptor according to one of the preceding claims, **characterized in that** the joining region (20, 21) has in each case one or more interlocking supporting elements (23) for an interlocking connection.

15. Adaptor according to one of the preceding claims, **characterized in that** the joining region (20, 21) has a plurality of connecting points (22) with embossed cups for bolted connections (24) which are supported in an interlocking manner, with the embossed cups in the joining region (20, 21) preferably being curved outwards.

16. Adaptor according to one of the preceding claims, **characterized in that** a supporting sleeve (31) is arranged in the hollow chassis-joining part (19) to one or more connecting points (22).

17. Adaptor according to one of the preceding claims, **characterized in that** an intermediate adaptor (26) with one or more height-offset joining regions (32) is arranged on the chassis-joining part (19).

18. Motor vehicle comprising a motorized tractor head (1) and an attachable chassis (2) which are connected by at least one adaptor (3) to a frame-joining part (13) for the fastening to the tractor head (1) and a chassis-joining part (19) for the fastening to the attachable chassis (2), **characterized in that** the adaptor (3) is integrated into the base frame (7) of the body shell of the tractor head (1), with the frame-joining part (13) being formed on the base frame (7) as part of a hollow longitudinal member (10) of the base frame (7) and having a support counter profile (14) which is complementary to a support profile (12) of the longitudinal member (10), and the two support profiles (12, 14) being connected to each other.

19. Motor vehicle according to Claim 18, **characterized in that** the adaptor (3) is designed according to one of Claims 5 to 17.

20. Motor vehicle according to Claim 18 or 19, **characterized in that** the attachable chassis (2) has rectilinear or bent (33) longitudinal members (8, 9).

21. Motor vehicle according to Claim 18, 19 or 20, **characterized in that** the outwardly bent (33) longitudinal members (8, 9) are fitted at their drawn-in front ends to the inner joining region (20) of the chassis-joining part (19).

## Revendications

1. Procédé de jonction de têtes de traction (1) motorisées et de châssis reporté (2) à l'aide d'un adaptateur (3) relié à la tête de traction (1) à l'aide d'une partie de raccordement de cadre (13) et au châssis reporté (2) à l'aide d'une partie de raccordement de châssis (19), **caractérisé en ce que** l'adaptateur (3) est intégré dans la coque et dans son châssis (7) lors de la fabrication de la tête de traction (1), la partie de raccordement de cadre (13) faisant partie d'un longeron (10) creux du châssis (7).

2. Procédé selon la revendication 1, **caractérisé en ce que** le châssis reporté (2) est monté avec un décalage en hauteur par rapport à la tête de traction (1).

3. Procédé selon la revendication 1 ou 2, **caractérisé en ce que** le châssis reporté (2) est fixé au choix au côté intérieur ou au côté extérieur de l'adaptateur (3).

4. Procédé selon la revendication 1, 2 ou 3, **caractérisé en ce que** deux têtes de traction (1) sont placées l'une contre l'autre dos à dos pour former une unité de transport automotrice, des jonctions longitudinales étant fixées au niveau de l'adaptateur {3) pour relier les têtes de traction (1).

5. Adaptateur de jonction de têtes de traction motorisées (1) et de châssis reporté (2), l'adaptateur (3) comportant une partie de raccordement de cadre (13) pour la fixation à la tête de traction (1) et une partie de raccordement de châssis (19) pour la jonction au châssis reporté (2), **caractérisé en ce que** l'adaptateur (3) peut être intégré dans le châssis (7) de la tête de traction (1) au niveau de sa coque, la partie de raccordement de cadre (13) faisant partie d'un longeron creux (10) du châssis (7).

6. Adaptateur selon la revendication 5, **caractérisé en ce que** l'adaptateur (3) comporte un contre-profilé porteur (14) complémentaire à un profilé porteur (12) du longeron (10).

7. Adaptateur selon la revendication 5 ou 6, **caractérisé en ce que** plusieurs adaptateurs (3) sont reliés à une ou plusieurs traverses transversales (17) pour former une unité d'adaptateurs (11).

8. Adaptateur selon la revendication 5, 6 ou 7, **caractérisé en ce que** le contre-profilé porteur (14) comporte au moins une bride (15) de jonction, de préférence de jonction soudée, avec le profilé porteur (12) du longeron (10), les profilés porteurs (12, 14) prenant la forme de profilés en tôle en forme de coque, de préférence de profilés chape.

9. Adaptateur selon l'une quelconque des revendications précédentes, **caractérisé en ce que** le contre-profilé porteur (14) prend une configuration cunéiforme pour former un renfort (16) et forme la partie inférieure du longeron (10) du châssis (7), la partie de raccordement de cadre (13) comportant un cache de support (18).

10. Adaptateur selon l'une quelconque des revendications précédentes, **caractérisé en ce que** la partie de raccordement de cadre (13) comporte une zone de raccordement (27) pour un support de cabine (6).

11. Adaptateur selon l'une quelconque des revendications précédentes, **caractérisé en ce que** la partie de raccordement de châssis (19) est décalée en hauteur par rapport à la partie de raccordement de cadre (13) et comporte un renfoncement (29) ou une bosse (30).

12. Adaptateur selon l'une quelconque des revendications précédentes, **caractérisé en ce que** la partie de raccordement de châssis (19) comporte sur au moins une de ses parois latérales, de préférence sur ses deux parois latérales, une zone de raccordement (20, 21) préalablement préparée, notamment pour les longerons (8, 9) du châssis reporté (2).

13. Adaptateur selon l'une quelconque des revendications précédentes, **caractérisé en ce que** la partie de raccordement de châssis (19) comporte une forme de caisson ou de tube (25) pour l'essentiel de forme parallélépipédique.

14. Adaptateur selon l'une quelconque des revendications précédentes, **caractérisé en ce que** la zone de raccordement (20, 21) comporte respectivement un ou plusieurs éléments de soutien (23) à complémentarité de formes pour une jonction par complémentarité de formes.

15. Adaptateur selon l'une quelconque des revendications précédentes, **caractérisé en ce que** la zone de raccordement (20, 21) comporte plusieurs points de jonction (22) dotés de marques en cuvette pour les assemblages vissés (24) supportés par complémentarité de formes, les marques en cuvette étant bombées de préférence vers l'extérieur au niveau de la zone de raccordement (20, 21).

16. Adaptateur selon l'une quelconque des revendications précédentes, **caractérisé en ce qu'**une douille de soutien (31) est disposée dans la partie de raccordement de châssis (19) au niveau d'un ou de plusieurs points de jonction (22).

17. Adaptateur selon l'une quelconque des revendications précédentes, **caractérisé en ce qu'**un adaptateur intermédiaire (26) est disposé au niveau de la partie de raccordement de châssis (19) avec une ou plusieurs zones de raccordement (32) décalées en hauteur.

18. Véhicule automobile consistant en une tête de traction (1) motorisée et en un châssis reporté (2) reliés par au moins un adaptateur (3) à une partie de raccordement de cadre (13) pour la fixation à la tête de traction (1) et à une partie de raccordement de châssis (19) pour la fixation au châssis reporté (2), **caractérisé en ce que** l'adaptateur (3) est intégré dans la coque dans le châssis (7) de la tête de traction (1), la partie de raccordement de cadre (13) prenant une forme de longeron (10) creux du châssis (7) au niveau du châssis (7) et comportant un contre-profilé porteur (14) complémentaire par rapport à un profilé porteur (12) du longeron (10) et les deux profilés porteurs (12, 14) étant reliés entre eux.

19. Véhicule automobile selon la revendication 18, **caractérisé en ce que** l'adaptateur (3) est réalisé selon l'une quelconque des revendications 5 à 17.

20. Véhicule automobile selon la revendication 18 ou 19, **caractérisé en ce que** le châssis reporté (2) comporte des longerons (8, 9) rectilignes ou incurvés (33).

21. Véhicule automobile selon la revendication 18, 19 ou 20, **caractérisé en ce que** les longerons (8, 9) incurvés (33) vers l'extérieur sont montés avec leur extrémité avant dégagée au niveau de la zone de raccordement (20) intérieure de la partie de raccordement de châssis (19).
